# EUROPEAN PATENT SPECIFICATION

(11) **EP 0 476 039 B1**
(45) Date of publication and mention of the grant of the patent: **31.08.1994**
(21) Application number: 90909794.1
(22) Date of filing: 05.06.1990
(51) Int. Cl.: B61H 13/00

(54) **AN ACTUATOR FOR DELIVERING A VARIABLE MECHANICAL FORCE**
BETÄTIGUNGSVORRICHTUNG ZUR ERZEUGUNG EINER VERÄNDERLICHEN MECHANISCHEN KRAFT
ACTUATEUR TRANSMETTANT UNE FORCE MECANIQUE VARIABLE

(30) Priority: 06.06.1989 SE 8902054
(43) Date of publication of application: 25.03.1992
(73) Proprietor: SAB WABCO Holdings B.V., NL-1700 AC Heerhugowaard (NL)
(72) Inventor: EMILSSON, Fred, Sören, S-231 00 Trelleborg (SE)
(74) Representative: Petri, Stellan
(86) International application number: SE9000385
(87) International publication number: WO9014979

(56) References cited:
- DE-B- 1 038 090
- DE-B- 1 052 441
- GB-A- 1 080 757
- SE-B- 0 371 153
- SE-C- 0 123 346
- US-A- 3 698 520

## Description

### Technical Field

This invention relates to an actuator for delivering a variable mechanical force. More specifically it relates to a so called electro-mechanical brake unit, preferably but not exclusively for rail vehicles.

### Background of the Invention

Conventionally, the braking of a rail vehicle is performed in that compressed air is admitted to a brake cylinder, wherein a piston moves axially and transmits an axial brake force. As an alternative, most often used for parking and emergency braking but occasionally also for service braking, a powerful spring is normally held compressed by compressed air in a cylinder, but when the air pressure is lowered a brake force is exerted.

There is currently a trend towards avoiding a compressed air system on modern rail vehicles, which means that no air for control or power generation is available. In contrast it is often desirable to utilize electricity both as the power generating medium and the control medium, partly in view of the frequent use of electronics in control systems and the simplicity in the equipment for transferring power in the form of electricity, which can be used for diverse applications on board a modern rail vehicle.

Accordingly, it is a growing interest for the concept called "braking by wire", i.e. a system in which a mechanical brake force is generated in relation to an electric signal supplied from the driver. The requirements on such a system are high, for example with regard to accuracy and response times in view of possible anti-skid functions and so forth, but also with regard to simplicity, reliability and ability to withstand the rather extreme environmental stresses underneath a rail vehicle.

In most actuators or electro-mechanical brake units of this kind an electric motor is used for generating the force. This force may either be used directly for mechanically applying the brakes or be stored in a spring means separately controlled for delivering the force at a later stage.

### The Invention

The present invention is based on a new principle, although in practical embodiments use is made of spring means and an electric motor. The invention is characterized by the features in claim 1.

In a practical embodiment the angle between the two constant and equally large forces acting on the roller from the spring is 90° in order to create a variation in resulting force from zero to twice the force of the spring.

The slack adjusting function for the actuator used as a brake unit can be accomplished by a non-rotatable spindle in engagement with a nut rotatable in the housing of the actuator by means of an electric adjustment motor. Also the virtually forceless application and return strokes are attained by this arrangement.

### Brief Description of the Drawings

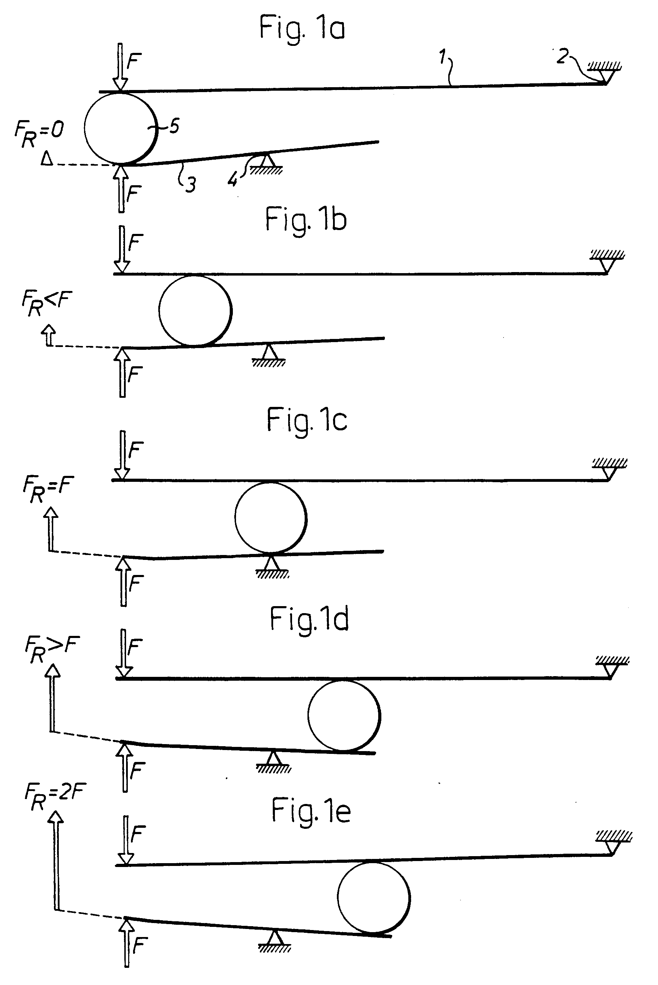

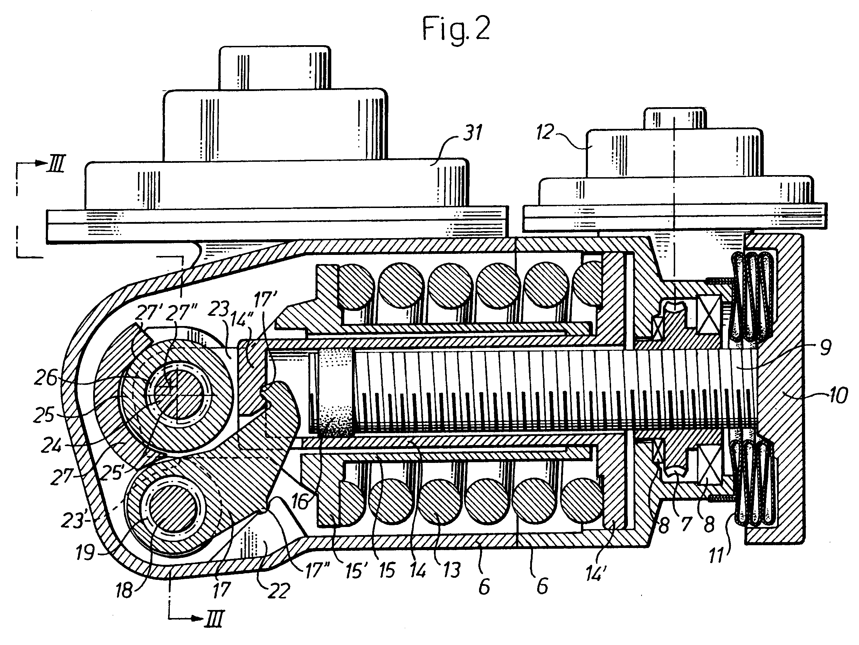

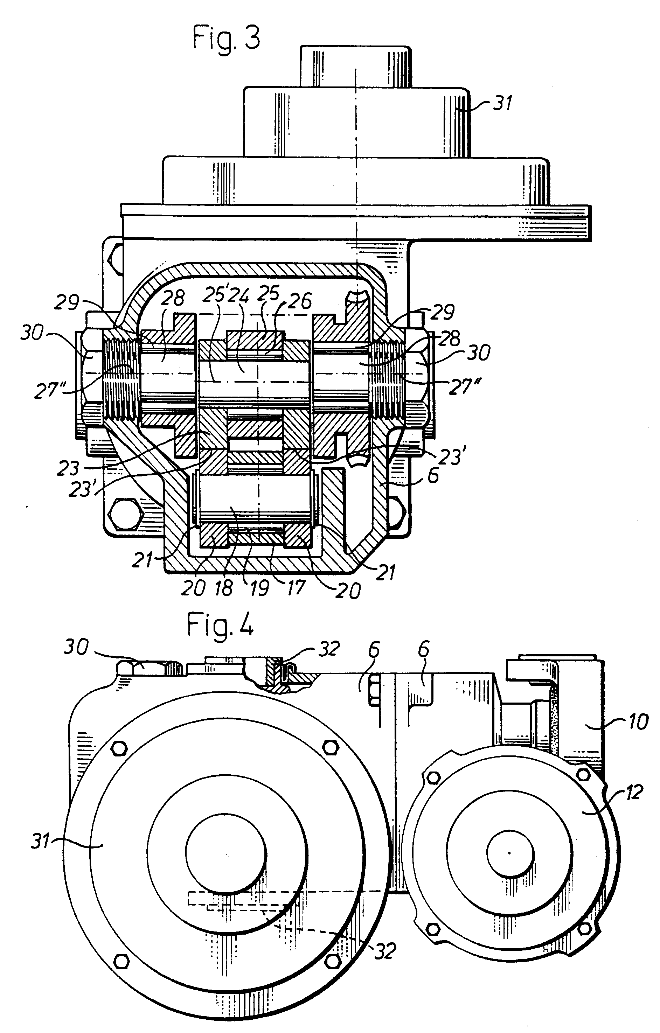

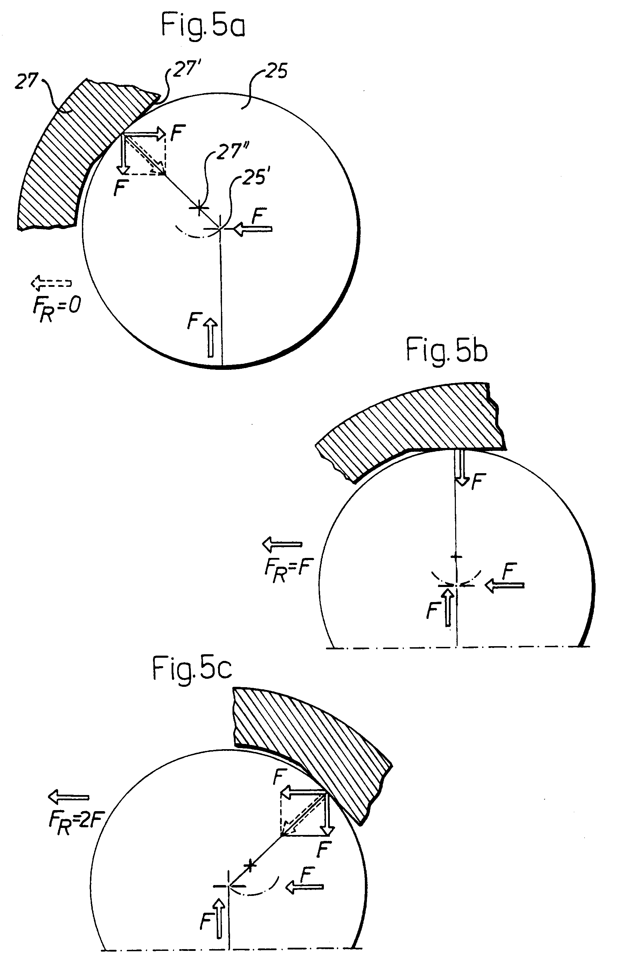

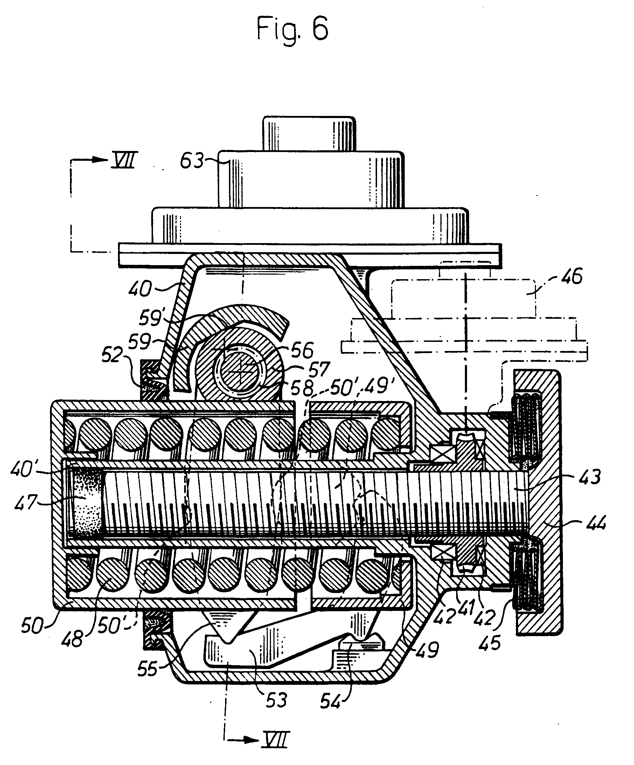

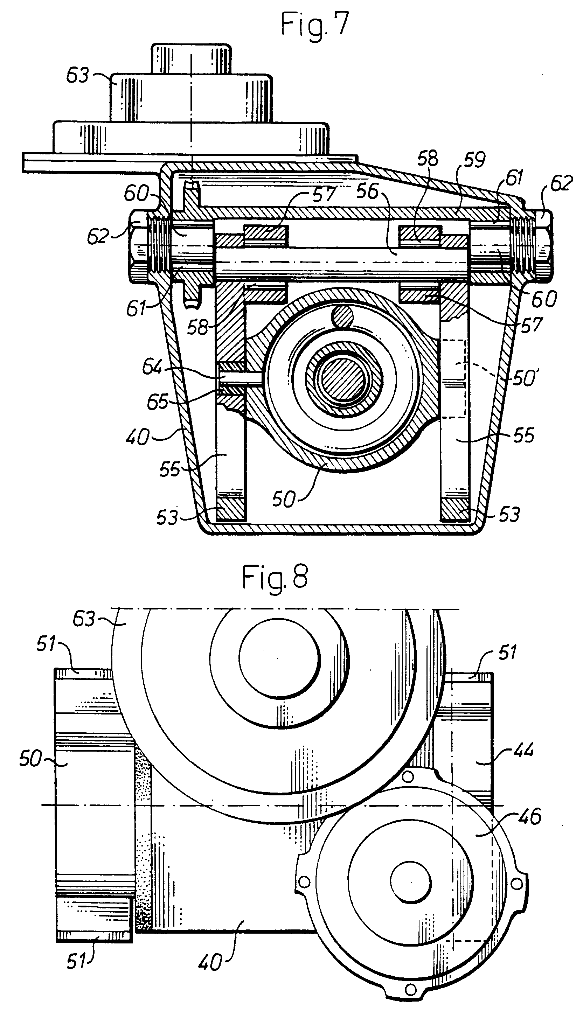

The invention will be described in further detail below reference being made to the accompanying drawings, in which Figs 1a-e are sketches to illustrate the principle for the invention, Fig 2 is a side view, mostly in cross section, of a first embodiment of an actuator or electro-mechanical brake unit according to the invention, Fig 3 is an end view, substantially along the line III-III in Fig 2, of this unit, Fig 4 is a top view to a reduced scale of the unit, Figs 5a-c are enlarged side views of two key components in this unit in three different working positions and serve to illustrate how the unit functions, Fig 6 is a side view, mostly in cross section, of a second embodiment of an actuator or electro-mechanical brake unit according to the invention, Fig 7 is an end view, substantially along the line VII-VII in Fig 6, of this second unit to a reduced scale, and Fig 8 is a top view of the unit to the same scale as Fig 7.

### Detailed Description of Preferred Embodiments

The principle underlying the present invention is illustrated in Figs 1a-e, showing a simple lever arrangement in five chosen positions. For the sake of clarity only Fig 1a is provided with reference numerals.

An upper lever 1 is pivoted at its right hand end at 2, whereas a lower lever 3 (shorter than the upper one) is pivoted at a center portion at 4. A roller 5 is movable between the two levers 1 and 3 by suitable means (not shown). The roller 5 may be replaced by any other device for the same purpose, the roller being chosen for the ease with which it may be transferred between the levers.

At their respective left hand ends the levers 1 and 3 are subjected to opposing counteracting forces F. For explaining the principle the forces need not be equal, but in the practical embodiments explained below they stem from the same spring. Also, the description is somewhat simplified by regarding the forces as equal. A resulting force considered to be delivered from the left hand end of the lower lever 3 is designated F_{R}.

Fig 1a illustrates the situation where the roller 5 is exactly between the two forces F leading to the obvious result that the delivered force F_{R} is zero. Due to the leverage chosen and shown, a movement of the roller 5 to the right between the levers 1 and 3 as illustrated in Fig 1b will result in a gradually increasing delivered force F_{R}, until the roller 5 is right over the pivot point 4 (Fig 1c) for the lower lever 3, resulting in F_{R} being F, as there is no positive or negative influence from the force F acting on the upper lever 1.

The delivered force F_{R} continues to increase when the roller 5 is transferred further to the right as depicted in Fig 1d, until at a certain position - depending on the leverage - the delivered force F_{R} is 2F as shown in Fig 1e. Further movement to the right of the roller 5 will of course result in even higher resulting forces F_{R}, but such situations have not been depicted.

The principle illustrated above can in practice be utilized in an actuator for delivering a variable mechanical force. In such an actuator the delivered force is wholly determined by the position of a control means; hereby the actuator can be easily controlled by an electric motor without any need for feed-back of the force in the system. Such an actuator is usable in various instances, a typical example, however, being a so called electro-mechanical brake unit for rail vehicles. The term "electro-mechanical brake unit" or shorter versions thereof is used below in the description of practical embodiments specifically intended for the utilization set out above.

Two practical electro-mechanical brake units, preferably but not exclusively for use on rail vehicles, will now be described with reference to the drawings. A first unit is shown in Figs 2-4 (with its function highlighted in Fig 5) and a second unit, which is similar to the first one but has a shorter axial length, in Figs 6-8. It must be kept in mind, though, that these units are only examples, among many, of practical embodiments utilizing the principle illustrated in Fig 1.

Turning first to Figs 2-4, the unit shown therein has a two-part housing 6. To the right in Fig 2 a nut 7 is rotatably journalled in the housing 6 by means of ball bearings 8. The nut 7 is in thread engagement with a spindle 9, which is ended outside the housing 6 by a spindle plate 10. This plate 10 is to be non-rotatably connected to further parts of a brake rigging (not shown) and constitutes a force-transmitting member of the unit. The intrusion of moisture, dirt and the like in the unit is prevented by a bellows 11 between the housing 6 and the spindle plate 10.

The nut 7 may be rotated on the non-rotatable spindle 9 by means of an electric adjustment motor 12 via a worm gear, of which one part is visible at the periphery of the nut 7. The function of the arrangement with the nut 7, the spindle 9 and the motor 12 is to adjust the position of the force transmitting plate 10 in relation to the housing 6 so as to compensate for the wear in the brake rigging to which the unit is to be mounted or in other words to constitute a slack adjusting device, as is well known in the art. The motor 12 is also used at every application and return stroke to move the plate 10 into and out of contact, respectively, with the member to be braked. When the plate 10 has reached such contact, the actuator is in a "ready-position".

In the housing 6 a powerful helical compression spring 13 is arranged in two axial spring cages 14 and 15. A right spring cage 14 has a flange 14' to the right in Fig 2 and the left spring cage 15 a flange 15' to the left; the spring 13 is arranged between these two flanges 14' and 15'. The right spring cage 14 is guided for certain axial movements in the housing 6 by the flange 14', and the spindle 9 is guided for axial movements inside the right spring cage 14 by means of a bushing 16 on the spindle. The left spring cage 15 is telescopically guided for axial movements on the right spring cage 14.

A lever 17 is rotatably arranged on a shaft 18 by means of a bearing 19. At either side of the lever 17 on the shaft 18 is arranged a roller 20 and outside thereof a locking ring 21 to keep the assembly together on the shaft 18, which is not journalled in the housing 6.

The end of the lever 17 to the right in Fig 2 is provided with a protrusion 17' cooperating with an end wall 14'' of the right spring cage 14, which is slotted to allow the lever 17 to extend into its interior. At its lower intermediate portion the lever 17 is provided with a boss 17'' supported by a fixed bracket 22 in the bottom of the housing 6.

By this arrangement the force from the spring 13 can be transmitted through the right spring cage 14 via the lever 17 to an upwardly directed force in the rollers 20.

The left spring cage 15 is extended to the left in Fig 2 by two ears 23, of which only one is visible in Fig 2 but both in Fig 3. The respective lower side of the ears 23 is provided with a plane 23' for interaction with the respective roller 20 in a way to be described below. The two ears 23 are connected by means of a pin 24. Between the ears 23 on the pin 24 is arranged a roller 25 rotatable on a bearing 26. The centre of rotation for the roller 25 is designated 25'. The pin is not journalled in the housing 6.

A control yoke 27 (Fig 2) has a plane surface 27' in contact with the roller 25 and may be rotatably displaced around a center of rotation 27'', which is slightly offset from the center of rotation 25' for the roller 25. At either side of the ears 23 the control yoke 27 is journalled on pins 28 provided with bearings 29. The pins 28 constitute ends of screws 30 attached in the housing 6 and are thus fixed relative to the housing 6.

The control yoke 27 may be rotatably displaced on its pins 28 by means of an electric control motor 31, actuating the yoke over a worm gear arrangement, of which one part is visible to the right in Fig 3.

The left spring cage 15 is not only extended into the ears 23 but also perpendicularly thereto into force-transmitting attachments 32, shown in Fig 4. Accordingly, the force from the brake unit is delivered from the spindle plate 10 and the attachments 32, to which legs of a disc brake arrangement or the like (not shown) may be attached.

The force delivered from the brake unit (between on one hand the spindle plate 10 or housing 6 and on the other hand the attachments 32 or thus the left spring cage 15) stems from the spring 13 and may (according to the principles illustrated in Figs 1a-e) vary from zero and upwards depending on the position of the control yoke 27 in relation to the roller 25, as will now be described under reference to Figs 5a-c.

Figs 5a-c illustrate the forces acting on the roller 25 and the resulting force in three different positions of the control yoke 27 (as accomplished by the control motor 31).

The position of the control yoke 27 in relation to the roller 25 shown in Fig 5a is the one also shown in Figs 2 and 3, to which reference is made for a proper understanding of the interplay between the forces. Acting on the roller 25 (through its center of rotation 25') is a force F from the spring 13 transmitted in the horisontal direction from right to left in Fig 5a via the left spring cage 15, the ears 23 and the pin 24 and a further force F from the spring 13 transmitted in the vertical direction from below and upwards in Fig 5a via the right spring cage 14, its end wall 14'', the lever 17, the shaft 18, the rollers 20, the ears 23 and the pin 24. The magnitude of this latter force may vary depending on the leverage of the lever 17 but can in this case for the sake of simplicity be regarded as equal to the above mentioned horisontal force.

A reaction force to the above mentioned two forces, emanating from the spring 13, is provided by the control yoke 27, which is in contact with the roller 25 via its plane surface 27' tangential to the roller. By its rotational arrangement in the housing 6, the yoke 27 can be regarded as a part of the housing 6 in this context. The two above mentioned forces from the spring 13 can be regarded as acting on the center of rotation 25' of the roller 25. The center of rotation 27'' is - due to the geometry of the arrangement - offset from the former center 25', but as illustrated in Figs 5b and c the center 25' is practically on the same arc (which is dash-dotted) irrespective of the position of the control yoke 27, which means that a radial line from the contact point of the control yoke with the roller 25 going through the center of rotation 27'' for the control yoke 27 also goes through the center of rotation 25' for the roller 25. The resulting reaction force from the control yoke 27 acting on the roller 25 and illustrated with dashed lines in Fig 5 accordingly goes through both centres of rotation 27'' and 25'. In the ordinary way this force may be divided in a horisontal and a vertical component, which both are of the magnitude F. The resulting force F_{R} of the described forces is zero, which means that with the position of the control yoke 27 shown in Fig 5a there will be no outgoing force from the unit via the attachments 32 (Fig 4) integral with the left spring cage 15.

In Fig 5b a second chosen position of the control yoke 27 is shown. Here the plane surface 27' of the control yoke 27 is horisontal, which means that the reaction force F is vertical and balances out the vertical force F from the lever 17 and the right spring cage 14. The resulting force F_{R} on the roller 25 then constitutes the horisontal force F to the left from the left spring cage 15 and the ears 23. Thus the force transmitted by the attachments 32 is the force of the spring 13.

In Fig 5c the control yoke 27 has been transferred by the control motor 31 to a third position. In a similar way to Fig 5a the reaction force from the control yoke can be divided into two components. The vertical component F of the reaction force balances out the force F from the lever 17 and the right spring cage 14. In the horisontal direction the reaction force component F adds to the force F from the left spring cage 15, resulting in a total force F_{R} from the attachments 32 of 2F.

So far only the forces transmitted as constant forces from opposite ends of the spring 13 to a variable resulting force have been described. However, energy is returned to the spring (through compression) by the elasticity in the braked system. Only a certain energy loss need to be compensated for by the electric control motor 31, assisting in transferring the control yoke 27 in the counter-clockwise rotational direction in Figs 2 and 5. This means that the normal energy loss at braking here is reduced to a minimum.

It has been demonstrated that with the described arrangement the simple leverage principles illustrated in Fig 1 practically can be utilized to obtain a simple, fast and reliable electrical control of an inherent, static, mechanical force (in this case from an ordinary compression spring 13) by means of simple position control.

A second embodiment of the invention is shown in Figs 6-8. The main difference relative to the first embodiment according to Figs 2-4 is that the components in principle are differently positioned so as to accomplish a unit with reduced axial dimension.

In a housing 40 a nut 41 is rotatably journalled by means of bearings 42. The nut 41 is in thread engagement with a spindle 43 ended by a non-rotatable spindle plate 44. A bellows 45 is arranged between the housing 40 and the spindle plate 44. The nut 41 may be rotated via a worm gear by an electric adjustment motor 46 for accomplishing a slack adjusting function. The spindle 43 is axially guided in a guiding tube 40' of the housing 40 via a bushing 47.

A powerful helical compression spring 48 is arranged around the housing tube 40' between two spring cages 49 and 50. A left spring cage 50 extends out of the housing 40 and constitutes a force-transmitting member of the unit. As appears in Fig 8, the spring cage 50 as well as the spindle plate 44 are provided with attachments 51 for levers or the like (not shown) of a disc brake caliper or the like. A protecting bellows 52 is arranged between the housing 40 and the spring cage 50.

The force of the spring 48 is transmitted from a right spring cage 49 to two levers 53 (one at each side of the right spring cage 49) via shoulders 49'. At an intermediate point each lever 53 is supported by a fixed bracket 54 in the housing 40 so as to be rockable therein.

The end of each lever 53 remote from the spring cage shoulder 49' carries an arm 55 extending upwards past the left spring cage 50. By the levers 53 the force of the spring 48 to the right in Fig 6 is transformed into an upwardly directed force in the arms 55.

At their upper ends the arms 55 are connected by means of a shaft 56, which is not journalled in the housing 40. Rollers 57 are journalled on the shaft 56 by means of bearings 58.

A control yoke 59 is in contact with the rollers 57 via plane surfaces 59'. The yoke 59 is rotatably journalled on pins 60 provided with bearings 61. The pins 60 constitute the ends of screws 62 attached in the housing 40. The control yoke 59 may be rotatably displaced on its pins 60 by means of an electric control motor 63, actuating the yoke over a worm gear arrangement, of which one part is visible in Fig 7.

As appears from Fig 6 and - perhaps more clearly - from the right hand portion of Fig 7 there is a connection between each arm 55 and the left spring cage 50 for force transmission in the axial direction of the spring 48 and spring cage 50. This is accomplished by exterior shoulders 50' of the left spring cage 50 cooperating with each side of the arm 55 at each side of the spring cage 50. A certain guiding in the vertical direction between the left spring cage 50 and each arm 55 may be accomplished by means of a pin 64 attached to the spring cage 50 and extending into a hole in the arm 55 provided with an elastic bushing 65.

The function of this second embodiment shown in Figs 6-8 is essentially the same as that of the first embodiment shown in Figs 2-5, especially as regards the effect of a displacement of the control yoke 59, whose position shown in Fig 6 results in a zero outgoing force from the unit. Reference is again made to Fig 5 and the description thereto.

## Claims

1. A brake actuator for delivering a variable mechanical force, **characterized** in that a roller (25; 57), which is connected to a member (32; 50) for transmitting a resulting force from the actuator, is acted on by the force from one end of a compression spring (13; 48) in its axial direction and via a lever (17; 53) by the force from the other end of the spring for forming an angle with the first mentioned force, the spring (13; 48) being clamped between two spring cages (14, 15; 49, 50), and in that the position of a reaction force support (27; 59) for the roller can be transferred along the periphery of the roller for creating different leverages and thus different resulting forces, the reaction force support being a control yoke (27; 59) rotatably arranged in the housing (6; 40) of the actuator and transferable in relation to the roller (25; 57) by means of an electric control motor (31; 63).

2. An actuator according to claim 1, **characterized** in that the angle between the two constant and equally large forces acting on the roller (25; 57) from the spring (13; 48) is 90° and in that the control yoke (27; 59) is to be transferred in relation to the roller along an arc of 90° in order to create a variation in resulting force from zero to twice the force of the spring.

3. An actuator according to claim 1 or 2, **characterized** in that an application and return stroke, respectively, as well as a slack adjusting function for the actuator used as a brake unit are accomplished by a non-rotatable spindle (9; 43) in engagement with a nut (7; 41) rotatable in the housing (6; 40) of the actuator by means of an electric adjustment motor (12; 46).

## Patentansprüche

1. Servobremsmotor zur Lieferung einer veränderlichen mechanischen Kraft,
dadurch **gekennzeichnet,**
daß eine Rolle (25; 57), die mit einem Glied (32; 50) zur Übertragung einer resultierenden Kraft aus dem Servomotor verbunden ist, durch die Kraft eines Endes einer Druckfeder (13; 48) in deren axialen Richtung und über einen Hebel (17; 53) durch die Kraft des anderen Endes der Feder unter einem Winkel zur erstgenannten Kraft beaufschlagt wird, wobei die Feder (13; 48) zwischen zwei Käfigen (14, 15; 49, 50) eingespannt ist, und daß die Position einer Reaktionskraftabstützung (27; 59) für die Rolle längs des Umfangs der Rolle verschoben werden kann zur Erzeugung von unterschiedlichen Hebelübersetzungen und somit unterschiedlichen resultierenden Kräften, wobei die Reaktionskraftabstützung ein Steuerbügel (27; 59) ist, der im Gehäuse (6; 40) des Servomotors drehbar angeordnet und durch einen elektrischen Steuermotor (31; 63) gegenüber der Rolle (25; 57) verstellbar ist.

2. Servomotor nach Anspruch 1, dadurch gekennzeichnet, daß der Winkel zwischen den beiden konstanten und gleich großen Kräften, die von der Feder (13; 48) auf die Rolle (25; 57) wirken, 90° beträgt und daß der Steuerbügel (27; 59) gegenüber der Rolle längs eines Bogens von 90° zu verschieben ist, um eine Veränderung der resultierenden Kraft zu erzeugen, deren Größe von Null bis zum doppelten der Kraft der Feder geht.

3. Servomotor nach Anspruch 1 oder 2, dadurch gekennzeichnet, daß ein Betätigungs- bzw. Rückhub und auch eine Spieleinstellfunktion für den als Bremseinheit verwendeten Servomotor durch eine nicht drehbare Spindel (9; 43) erzielbar sind, die mit einer Mutter (7;41) in Eingriff steht, die durch einen elektrischen Einstellmotor (12; 46) im Gehäuse (6; 40) des Servomotors gedreht werden kann.

## Revendications

1. Actuateur de frein transmettant une force mécanique variable, caractérisé en ce qu'un rouleau (25;57), qui est connecté à un organe (32;50) transmettant de l'actuateur une force résultante, est actionné par une force provenant de l'extrémité d'un ressort de compression (13;48) selon sa direction axiale et via un levier (17;53) par la force provenant de l'autre extrémité du ressort afin de former un angle avec la première force mentionnée, le ressort (13;48) étant serré entre deux cages de ressort (14,15;49,50), et en ce que la position d'un support (27;59) de la force de réaction pour le rouleau peut être transférée le long de la périphérie du rouleau afin de créer différents bras de levier et ainsi différentes forces résultantes, le support de la force de réaction étant une chape de contrôle (27;59) placée libre en rotation dans le carter (6;40) de l'actuateur et transférable par rapport au rouleau (25;57) au moyen d'un moteur de contrôle électrique (31;63).

2. Actuateur selon la revendication 1, caractérisé en ce que l'angle entre les deux forces constantes et d'intensité égale agissant sur le rouleau (25;57) depuis le ressort (13;48) est de 90° et en ce que la chape de contrôle (27;59) est à transférer en relation avec le rouleau selon un arc de 90°, de façon à créer une variation dans la force résultante allant de zéro à deux fois la force du ressort.

3. Actuateur selon la revendication 1 ou 2, caractérisé en ce qu'un mouvement d'application et de retour respectivement, de même qu'une fonction d'ajustement de jeu pour l'actuateur utilisé comme unité de freinage sont réalisés par une broche non tournante (9;43) s'engageant avec un écrou (7;41) libre en rotation dans le carter (6;40) de l'actuateur au moyen d'un moteur d'ajustement électrique (12;46).
